# EUROPEAN PATENT APPLICATION

(11) **EP 4 568 350 A1**
(43) Date of publication of application: **11.06.2025**
(21) Application number: 23850320.5
(22) Date of filing: 25.07.2023
(51) Int. Cl.: H04W 40/22, H04W 48/20, H04W 48/10, H04W 36/00, H04W 36/30, H04W 92/18

(54) **MULTI-PATH MANAGEMENT METHOD**

(30) Priority: 03.08.2022 US 202263394641 P
(71) Applicant: LG Electronics Inc., Yeongdeungpo-gu Seoul 07336 (KR)
(72) Inventor: KIM, Seokjung, Seoul 06772 (KR); KIM, Laeyoung, Seoul 06772 (KR); YOUN, Myungjune, Seoul 06772 (KR); BYUN, Daewook, Seoul 06772 (KR)
(74) Representative: Plasseraud IP
(86) International application number: PCT/KR2023/010723
(87) International publication number: WO 2024/029813

(57) **Abstract**

An embodiment according to the present disclosure provides a method for a remote UE to perform communication. The method comprises the steps of: communicating with a first base station through a direct path without relaying via a relay UE; receiving first SIB information from the first base station; establishing a first PC5 link with the relay UE; communicating with the first base station through an indirect path via the relay UE on the basis of the first PC5 link; receiving a notification message from the relay UE, wherein the notification message includes information indicating the relay UE has performed cell reselection and second SIB information received from a second base station by the relay UE, and the second base station manages a target cell of the cell reselection; and determining, on the basis of the first SIB information and the second SIB information, whether multi-path communication through the direct path and indirect path is possible.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### DISCLOSURE

### TECHNICAL PROBLEM

There is a discussion on Multi-path that uses both the Indirect Path between the Remote UE and the Base Station through the relay of the relay UE and the Direct Path between the Remote UE and the Base Station without the relay of the relay UE. For Multi-path, the Base Station that manages the serving cell of the remote UE and the Base Station that manages the serving cell of the relay UE must be the same.

While communication is in progress through Multi-path, if cell reselection and handover of the relay UE are performed, a base station for the relay UE may become different, which is problematic.

### TECHNICAL SOLUTION

When cell reselection and handover of a relay UE are performed, the remote UE may be made aware of this fact so that the remote UE can decide whether to maintain multi-path.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 is a block diagram of a next generation cellular network.
FIGS. 5a and 5b illustrate the Layer-2 link establishment procedure for unicast mode of ProSe Direct communication via PC5 reference point.
FIG. 6 shows the layer-2 release procedure through the PC5 reference point.
FIG. 7 illustrates a scenario in which the Direct Path and the Indirect Path are served to the UE via one identical NG-RAN.
FIG.8 illustrates a scenario in which two different Indirect Paths are served to the UE via one identical NG-RAN.
FIG.9 illustrates a scenario in which the Direct Path and the Indirect Path are served to the UE via two different NG-RANs.
FIG.10 illustrates a scenario in which two different Indirect Paths are served to the UE via two different NG-RANs.
FIG. 11 shows a flowchart according to an embodiment of this specification.
FIG. 12 shows a flowchart according to an embodiment of the present specification.
FIG. 13 shows the procedure of the remote UE for the disclosure of the present specification.
FIG. 14 shows the procedure of the relay UE for the disclosure of the present specification.
FIG. 15 shows the procedure of the first base station for the disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

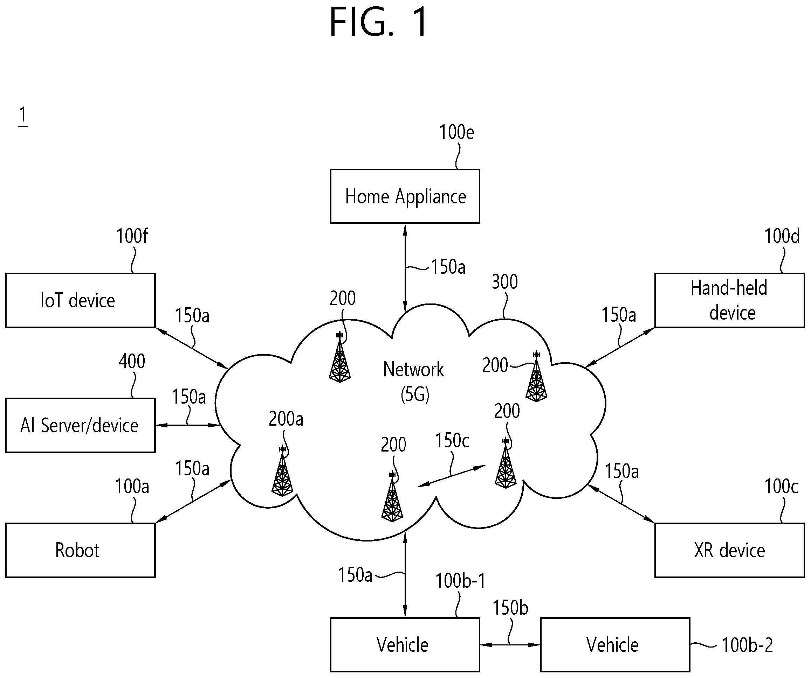

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

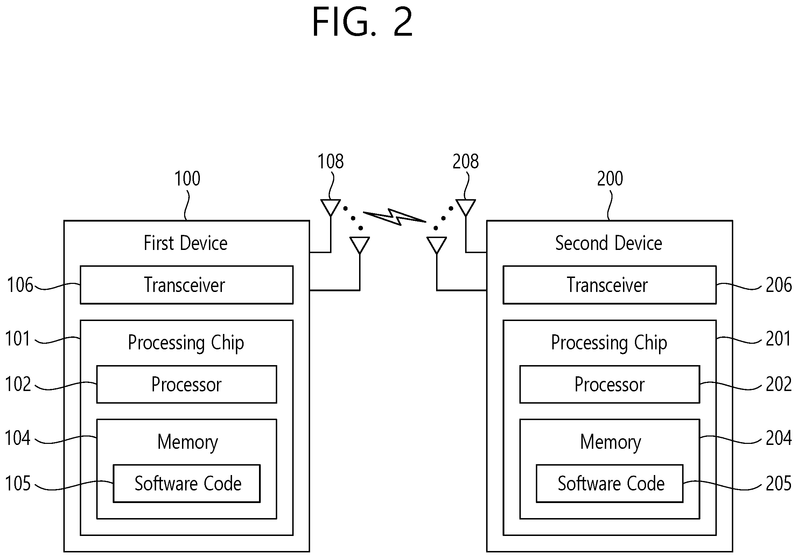

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104, 204 may be associated with the one or more processors 102, 202 and may store various forms of data, signals, messages, information, programs, codes, instructions, and/or commands. The one or more memories 104, 204 may comprise random access memory (RAM), dynamic RAM (DRAM), read-only memory (ROM), erasable programmable ROM (EPROM), flash memory, volatile memory, non-volatile memory, hard drives, registers, cache memory, computer-readable storage media, and/or combinations thereof. The one or more memories 104, 204 may be located inside and/or outside of the one or more processors 102, 202. Further, the one or more memories 104, 204 may be coupled to the one or more processors 102, 202 via various technologies, such as wired or wireless connections.

The one or more transceivers 106, 206 may transmit user data, control information, wireless signals/channels, etc. referred to in the descriptions, features, procedures, suggestions, methods, and/or flowcharts of operation disclosed herein to one or more other devices. The one or more transceivers 106, 206 may receive user data, control information, wireless signals/channels, etc. referred to in the descriptions, features, procedures, suggestions, methods, and/or flowcharts of operation disclosed herein from one or more other devices. For example, the one or more transceivers 106, 206 may be associated with the one or more processors 102, 202 and may transmit and receive wireless signals. For example, the one or more processors 102, 202 may control the one or more transceivers 106, 206 to transmit user data, control information, wireless signals, etc. to one or more other devices. Further, the one or more processors 102, 202 may control the one or more transceivers 106, 206 to receive user data, control information, wireless signals, etc. from the one or more other devices.

The one or more transceivers 106, 206 may be associated with one or more antennas 108, 208. Additionally and/or alternatively, the one or more transceivers 106, 206 may include one or more antennas 108, 208. The one or more transceivers 106, 206 may be configured to transmit and receive, via the one or more antennas 108, 208, user data, control information, wireless signals/channels, etc. referred to in the descriptions, features, procedures, suggestions, methods, and/or flowcharts of operation disclosed herein. As used herein, the one or more antennas 108, 208 may be a plurality of physical antennas, or a plurality of logical antennas (e.g., antenna ports).

The one or more transceivers 106, 206 may convert the received user data, control information, radio signals/channels, etc. from RF band signals to baseband signals in order to process the received user data, control information, radio signals/channels, etc. using the one or more processors 102, 202. The one or more transceivers 106, 206 may convert the processed user data, control information, radio signals/channels, etc. from baseband signals to RF band signals using the one or more processors 102, 202. To do so, the one or more transceivers 106, 206 may include (analog) oscillators and/or filters. For example, the one or more transceivers 106, 206 may up-convert an OFDM baseband signal to an OFDM signal via an (analog) oscillator and/or filter under the control of the one or more processors 102, 202, and transmit the up-converted OFDM signal at the carrier frequency. The one or more transceivers 106, 206 may receive the OFDM signal at the carrier frequency and, under the control of the one or more processors 102, 202, down-convert the OFDM signal to an OFDM baseband signal via an (analog) oscillator and/or filter.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

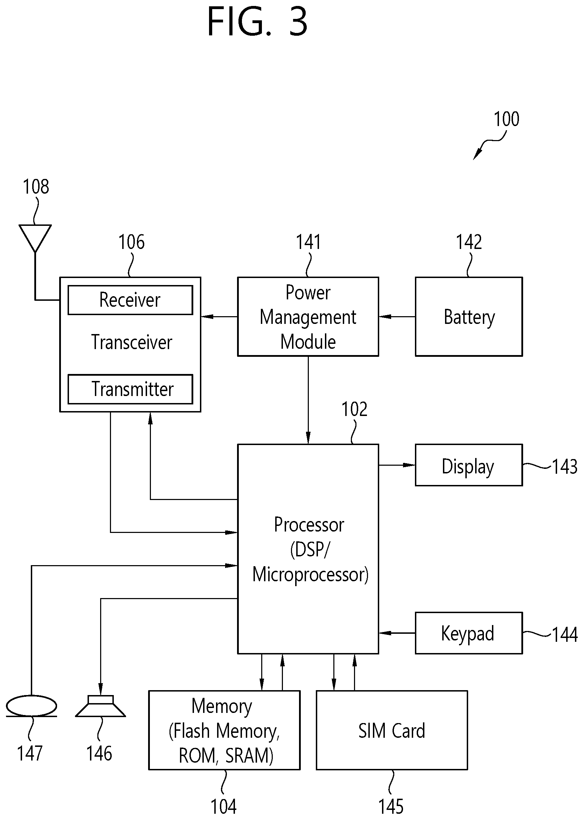

**FIG. 3** **shows an example of UE to which implementations of the present disclosure is applied.**

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

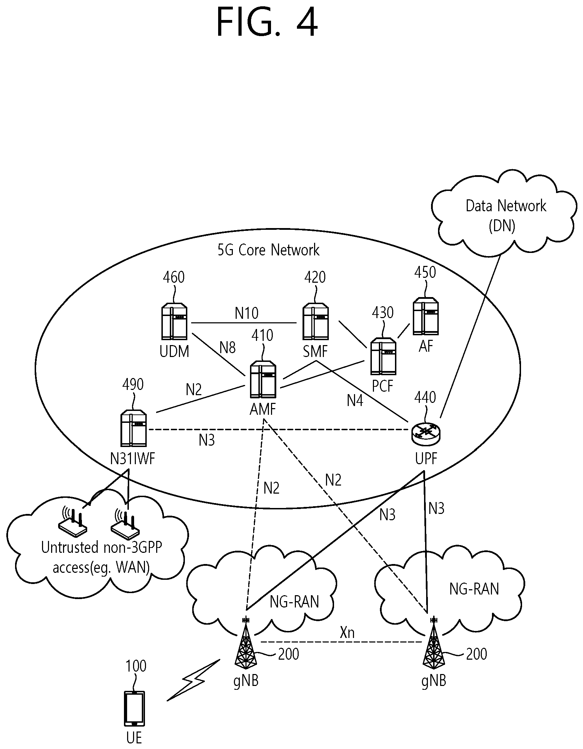

**FIG. 4** **is a block diagram of a next generation cellular network.**

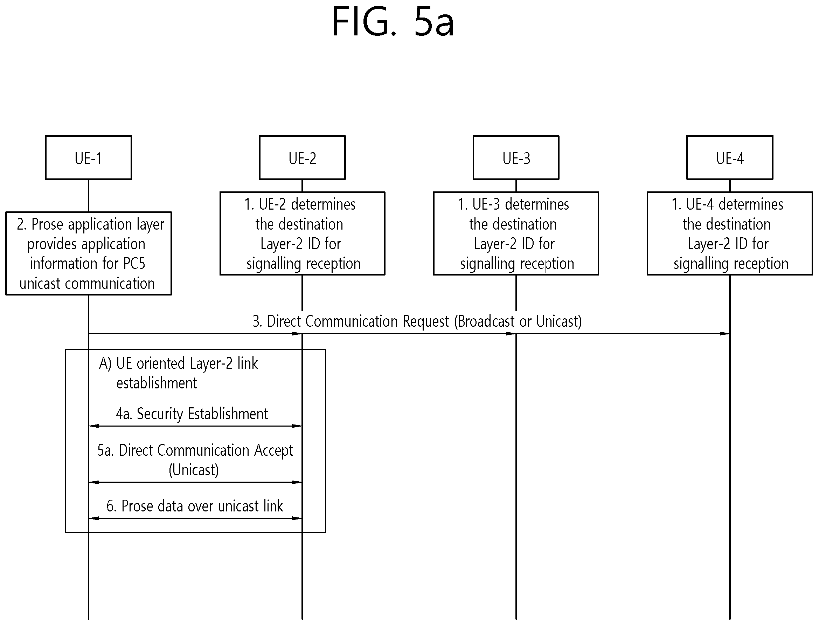

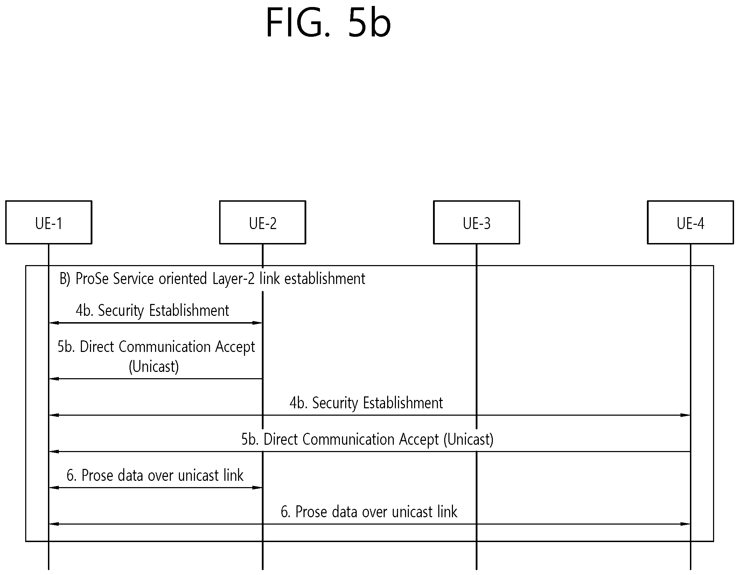

The 5G Core (5GC) may include a variety of components, some of which are shown in FIG. 5, such as the Access and Mobility Management Function (AMF) (410), the Session Management Function (SMF) (420), the Policy Control Function (PCF) (430), the User Plane Function (UPF) (440), the Application Function (AF) (450), the UDF (UDF) (450), and the UDF (UDF) (450): Policy Control Function (PCF) (430), User Plane Function (UPF) (440), Application Function (AF) (450), Unified Data Management (UDM) (460), and Non-3rd Generation Partnership Project (3GPP) Inter Working Function (N3IWF) (490).

The UE 100 is connected to the data network via the UPF 440 through a next generation radio access network (NG-RAN) including the gNB 20.

The UE 100 may also be provided data services via untrusted non-3GPP access, such as a wireless local area network (WLAN). To connect said non-3GPP access to the core network, a N3IWF 490 may be deployed.

The illustrated N3IWF 490 performs the function of managing the interworking between the non-3GPP access and the 5G system. When the UE 100 is associated with a non-3GPP access (e.g., WiFi, also referred to as IEEE 801.11), the UE 100 may be associated with the 5G system via the N3IWF 490. The N3IWF 490 communicates with the AMF 410 for control signaling and with the UPF 440 via the N3 interface for data transfer.

The illustrated AMF 410 may manage access and mobility in a 5G system. The AMF 410 may perform functions to manage Non-Access Stratum (NAS) security. The AMF 410 may perform functions to handle mobility in an idle state.

The UPF 440 shown is a type of gateway through which user data is transmitted and received. The UPF node 440 may perform all or part of the user plane functions of the Serving Gateway (S-GW) and Packet Data Network Gateway (P-GW) of fourth generation mobile communications.

The UPF 440 acts as a demarcation point between the next generation radio access network (NG-RAN) and the core network, and is the element that maintains the data path between the gNB 20 and the SMF 420. Additionally, the UPF 440 acts as a mobility anchor point when the UE 100 moves across the area served by the gNB 20. The UPF 440 may perform functions to handle PDUs. For mobility within the NG-RAN (Next Generation-Radio Access Network as defined in 3GPP Release-15 and later), the UPF may route packets. The UPF 440 may also function as an anchor point for mobility with other 3GPP networks (RANs defined prior to 3GPP Release-15, e.g., UTRAN, E-UTRAN (Evolved-UMTS (Universal Mobile Telecommunications System) Terrestrial Radio Access Network), or GERAN (Global System for Mobile Communication (GSM)/EDGE (Enhanced Data rates for Global Evolution) Radio Access Network). The UPF 440 may correspond to a termination point of the data interface to the data network.

The PCF 430 shown is a node that controls the operator's policies.

The AF 450 shown is a server for providing multiple services to the UE 100.

The UDM 460 shown is a type of server that manages subscriber information, such as a home subscriber server (HSS) in fourth generation mobile communications. The UDM 460 stores and manages subscriber information in a unified data repository (UDR).

The SMF 420 shown may perform the function of assigning an Internet Protocol (IP) address of a UE. The SMF 420 may also control protocol data unit (PDU) sessions.

As a point of reference, the drawing symbols for AMF 410, SMF 420, PCF 430, UPF 440, AF 450, UDM 460, N3IWF 490, gNB 20, or UE 100 may be omitted herein.

Fifth generation mobile communications supports multiple numerologies or subcarrier spacings (SCS) to support various 5G services. For example, an SCS of 15 kHz supports wide area coverage in traditional cellular bands; an SCS of 30 kHz/60 kHz supports dense-urban, lower latency, and wider carrier bandwidth; and an SCS of 60 kHz or higher supports bandwidths greater than 24.25 GHz to overcome phase noise.

### < Layer-2 link establishment >

**FIGS. 5a** **and** **5b** **illustrate the Layer-2 link establishment procedure for unicast mode of ProSe Direct communication via PC5 reference point.**
1. UE(s) determine destination Layer-2 ID for signal reception for PC5 unicast link establishment.
2. ProSe application layer of UE-1 provides application information for PC5 unicast communication. Application information includes ProSe service information and Application Layer ID of UE. Application Layer ID of target UE may be included in application information.

ProSe application layer of UE-1 may provide ProSe application requirements for this unicast communication. UE-1 determines PC5 QoS parameters and PFI.

If UE-1 decides to reuse existing PC5 unicast link, UE triggers Layer-2 link modification procedure.

3. UE-1 initiates unicast Layer-2 link establishment procedure by transmitting Direct Communication Request message. Direct Communication Request message includes:
- Source user information: Application Layer ID of initiating UE (i.e. Application Layer ID of UE-1).
- If the ProSe Application Layer provides the Application Layer ID of the target UE in step 2, the following information is included:
- Target User Information: Application Layer ID of the target UE (e.g. Application Layer ID of UE-2).
- ProSe Service Information: Information about the ProSe identifier requesting Layer-2 link establishment.
- Security Information: Information for security establishment.

The target Layer-2 ID may be a broadcast or unicast Layer-2 ID. If a unicast Layer-2 ID is used, the target user information must be included in the Direct Communication Request message.

UE-1 sends a Direct Communication Request message via PC5 broadcast or unicast using the source Layer-2 ID and the target Layer-2 ID.

The default PC5 DRX configuration may be used for transmission and reception of this message.

4. Security with UE-1 is established as follows:
4a. If the target user information is included in the Direct Communication Request message, the target UE, e.g., UE-2, responds by establishing security with UE-1.
4b. If the target user information is not included in the Direct Communication Request message, the UE that wants to use the ProSe service announced over the PC5 unicast link with UE-1 responds by establishing security with UE-1.

If security protection is enabled, UE-1 sends the following information to the target UE:
- If IP communication is used:
- IP address configuration: In case of IP communication, IP address configuration is required for this link and indicates one of the following values:
- "DHCPv4 Server": If the initiating UE supports only IPv4 address allocation mechanism (e.g., acts as a DHCPv4 server), or
- "IPv6 Router": If the initiating UE supports only IPv6 address allocation mechanism (e.g., acts as an IPv6 router).
- "DHCPv4 Server & IPv6 Router" if both IPv4 and IPv6 address allocation mechanisms are supported by the initiating UE, or
- "Address allocation not supported" if neither IPv4 nor IPv6 address allocation mechanisms are supported by the initiating UE.
- Link-local IPv6 address: If UE-1 does not support IPv6 IP address allocation mechanism, e.g., IP address configuration indicates "Address allocation not supported", then this is a locally formed link-local IPv6 address.
- QoS information: Information about PC5 QoS flows. For each PC5 QoS flow, it includes PFI and corresponding PC5 QoS parameters (e.g. PQI and conditional other parameters (e.g. MFBR/GFBR etc.)), optionally include ProSe identifier(s).
- Optional PC5 QoS rules.

The target Layer-2 ID is set to the source Layer-2 ID of the received Direct Communication Request message.

Upon receiving the Security Setup Procedure message, UE-1 acquires the Layer-2 ID of the peer UE for future communication for signaling and data traffic on this unicast link.

5. The target UE, which has successfully established security with UE-1, sends a Direct Communication Accept message to UE-1:
5a. (UE oriented Layer-2 link establishment) If the target user information is included in the Direct Communication Request message, if the Application Layer ID of the target UE, e.g., UE-2, matches, UE-2 responds with a Direct Communication Accept message.
5b. (ProSe service oriented Layer-2 link establishment) If the target user information is not included in the Direct Communication Request message, UE, which is interested in using the announced ProSe service, responds to the request by sending a Direct Communication Accept message (UE-2 and UE-4 in Figure 5).

The Direct Communication Accept message contains:
- Source user information: Application Layer ID of the UE sending the Direct Communication Accept message.
- QoS information: Information about the PC5 QoS flow. For each PC5 QoS Flow, it contains the PFI requested by UE-1 and the corresponding PC5 QoS parameters (e.g., PQI and conditionally other parameters (e.g., MFBR/GFBR, etc.)), and optionally the associated ProSe identifier(s).
- Optional PC5 QoS rules.
- If IP communication is used:
- IP address configuration: For IP communication, this link requires IP address configuration and indicates one of the following values:
- "DHCPv4 Server" if the target UE supports only IPv4 address allocation mechanism, e.g. acts as a DHCPv4 server, or
- "IPv6 Router" if the target UE supports only IPv6 address allocation mechanism, e.g. acts as an IPv6 router, or
- "DHCPv4 Server & IPv6 Router" if the target UE supports both IPv4 and IPv6 address allocation mechanisms, or
- "Address allocation not supported" if neither IPv4 nor IPv6 address allocation mechanisms are supported by the target UE.
- Link-local IPv6 address: If the target UE does not support IPv6 IP address allocation mechanism, e.g. "Address allocation not supported" is indicated in IP address configuration and UE-1 includes a link-local IPv6 address in the Direct Communication Request message, then this is a locally formed link-local IPv6 address. The target UE shall include a non-conflicting link-local IPv6 address.

If both UEs (e.g., the initiating UE and the target UE) are selected to use link-local IPv6 addresses, they must disable duplicate address detection.

If either the initiating UE or the target UE indicates that it supports IPv6 routing, the address configuration procedure is performed after the layer 2 link is established, and the link-local IPv6 address is ignored.

The ProSe layer of the UE that established the PC5 unicast link forwards the PC5 link identifier and PC5 unicast link-related information assigned to the unicast link to the AS layer. The PC5 unicast link-related information includes layer-2 ID information (e.g., source layer-2 ID and target layer-2 ID). This allows the AS layer to maintain the PC5 link identifier together with the PC5 unicast link-related information.

The two UEs may negotiate the PC5 DRX configuration at the AS layer, and the PC5 DRX parameter values may be configured for each source and target Layer-2 ID pair at the AS layer.

### 6. ProSe data is transmitted over the unicast link configured as follows:

PC5 link identifier and PFI are provided to the AS layer along with the ProSe data.

Optionally, Layer-2 ID information (e.g., source Layer-2 ID and destination Layer-2 ID) is additionally provided to the AS layer.

UE-1 transmits ProSe data using the source Layer-2 ID (e.g., Layer-2 ID of UE-1 for this unicast link) and the destination Layer-2 ID (e.g., Layer-2 ID of peer UE for this unicast link).

Since the PC5 unicast link is bidirectional, the peer UE of UE-1 may transmit ProSe data to UE-1 over the unicast link with UE-1.

### <Layer-2 link release>

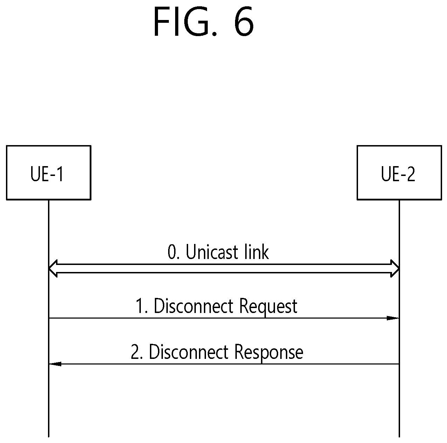

**FIG. 6** **shows the layer-2 release procedure through the PC5 reference point.**
0. UE-1 and UE-2 have a unicast link established.
1. UE-1 sends a Disconnect Request message to UE-2 to release the Layer-2 link and deletes all context data related to the Layer-2 link. The Disconnect Request message includes security information.
2. UE-2, which receives the Disconnect Request message, responds with a Disconnect Response message and deletes all context data related to the Layer-2 link. The Disconnect Response message includes security information.

The ProSe layer of each UE notifies the AS layer that the unicast link has been released. The ProSe layer indicates the released unicast link using the PC5 link identifier. This allows the AS layer to delete the context related to the released unicast link.

After connecting to the 5G ProSe UE-to-Network Relay, the 5G ProSe remote UE continues to measure the signal strength of the 5G ProSe UE-to-Network Relay and the PC5 unicast link for relay reselection.

### <Problems to be solved in the disclosure of this specification>

A method to support ProSe (Proximity based Services) in 5GS was discussed. A method to receive network connection services through UE-to-Network Relay was discussed. The UE-to-Network Relay may be a Layer-2 UE-to-Network Relay or a Layer-3 UE-to-Network Relay. For details, refer to TS 23.304 V17.3.0.

The UE may receive connection services from the network in the following ways:
- Direct Path (Direct Network Communication): The UE receives services directly from the network without going through the UE-to-Network Relay.
- Indirect Path (Indirect Network Communication): The UE indirectly receives services from the network through the UE-to-Network Relay.

Previously, the following scenarios were considered not possible:
- UE receives network connection service through one or more Layer-2 UE-to-Network Relays and simultaneously receives network connection service through direct path.
- UE receives network connection service through two or more Layer-2 UE-to-Network Relays.

Even when UE receives network connection service through Layer-2 UE-to-Network Relays, it may perform RRC and NAS operations with NG-RAN and core network (via Layer-2 UE-to-Network Relays). In the above scenarios, UE has multiple RRC connections and NAS connections through 3GPP access (e.g., Uu interface between UE and NG-RAN in case of direct path, and Uu interface between Layer-2 UE-to-Network Relay and NG-RAN in case of indirect path), which was not previously allowed.

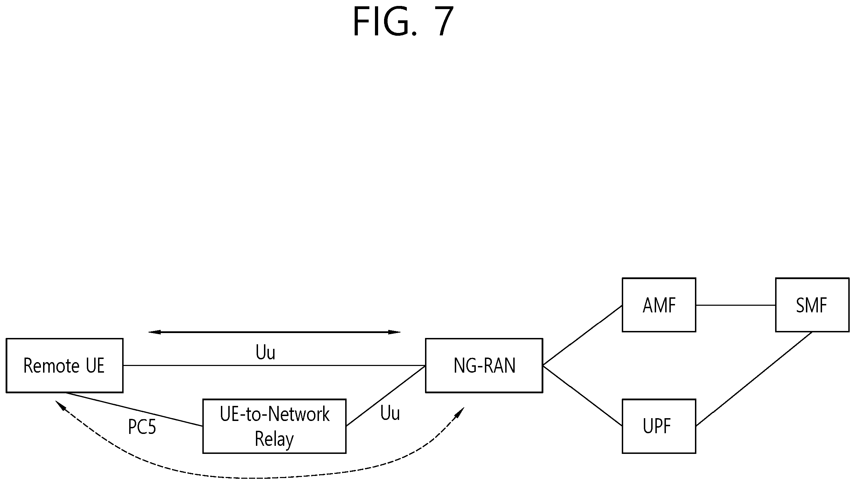

Scenarios in which UE receives service from network through multiple paths may be considered. FIGS. 7 to 10 illustrate scenarios in which a UE receives services from a network via two paths (Direct Path or Indirect Path).

**FIG. 7** **illustrates a scenario in which the Direct Path and the Indirect Path are served to the UE via one identical NG-RAN.**

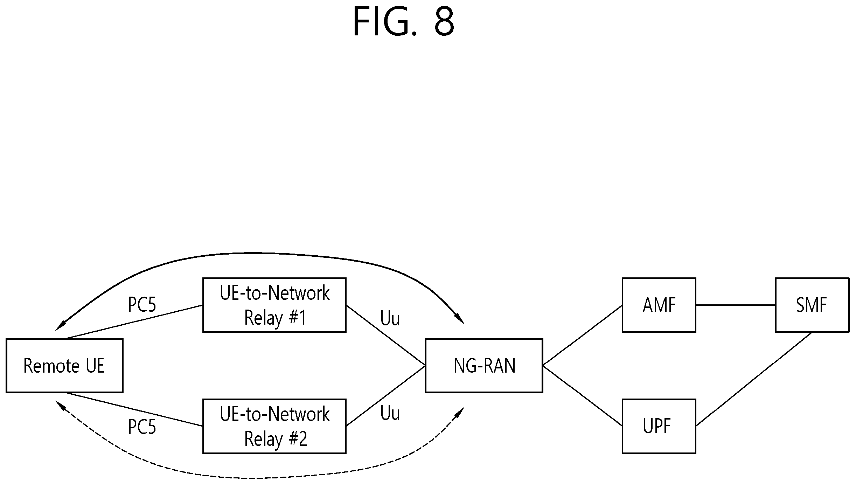

**FIG.8** **illustrates a scenario in which two different Indirect Paths are served to the UE via one identical NG-RAN.**

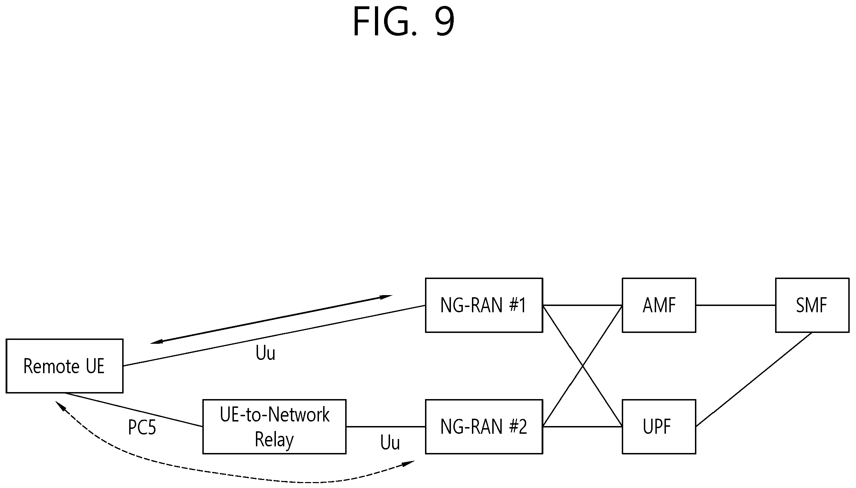

**FIG.9** **illustrates a scenario in which the Direct Path and the Indirect Path are served to the UE via two different NG-RANs.**

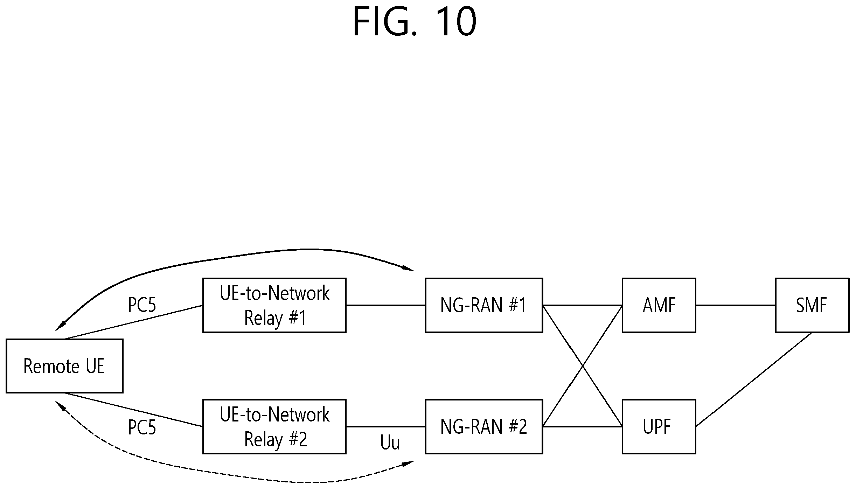

**FIG.10** **illustrates a scenario in which two different Indirect Paths are served to the UE via two different NG-RANs.**

In FIGs. 7 to 10, it is assumed that for all paths (Direct Path or Indirect Path), the connection/communication between the UE and the network on the path is 3GPP access (e.g., Uu interface). For example, in the case of the Direct Path, the connection/communication between the UE and the network is made through 3GPP access. And, in the case of the Indirect Path, the connection/communication between the UE-to-Network Relay and the network is made through 3GPP access.

FIGs. 7 to 10 show two paths, but this may be extended to three or more paths.

In FIGs. 7 to 10, multiple paths are shown to be served through the same PLMN. However, multiple paths may be served through different PLMNs.

A UE using multiple paths may be assumed to support both non-roaming and roaming cases.

There is a discussion on multi-path transmission using one direct network communication path (Direct Path) via UE-to-network relay and one indirect network communication path (Indirect Path) for reliability or data rate improvement.

Multi-path support may improve the stability and throughput of communication. Multiple paths may be utilized simultaneously. Switching between multiple paths may also be possible.

A terminal may be connected to the same gNB using one Direct Path and one Indirect Path (Layer-2 UE-to-Network relay or Indirect Path through another UE). Here, the solution for Layer-2 UE-to-Network relay may be reused for another UE.

In this specification, if there is no special mention of the Indirect Path, it is assumed to be through Layer-2 UE-to-Network Relay by default.

If the Remote UE uses multi-path (e.g., multiple paths), both paths must be able to connect to the same base station. For example, the base station to which the serving cell of the Remote UE related to the Direct Path belongs and the base station to which the serving cell of the Relay UE belongs must be the same. For example, in the case of FIG. 7, the terminal and the network may communicate through multi-path.

In the state of Fig. 7, if the Relay UE receives service from another base station due to cell reselection or handover, the Remote UE can no longer communicate through Multi-path. Therefore, a method is required to efficiently support the Remote UE using Multi-path to quickly release the PC5 connection with the Relay UE and search for a new Relay UE.

### <Disclosure of this specification>

If cell reselection is performed for the Relay UE, the Relay UE may receive SIB1 from the new serving cell. Then, the relay UE may quickly transfer SIB1 to the Remote UE to determine whether the Remote UE can perform Multi-path transmission.

Or, if a handover is performed for the Relay UE, the base station (the base station managing the Direct Path) may determine that Multi-path transmission is no longer possible for the Remote UE. In this case, the base station (the base station managing the Direct Path) may notify the Remote UE of the suspension of Multi-path transmission through the Direct Path.

The method for supporting a UE using Multi-path in this specification may be composed of a combination of one or more of the following operations/configurations/steps.

The method for supporting a UE using Multi-path in this specification assumes that in the case of Indirect Network Communication, a network connection service is received through a Layer-2 UE-to-Network Relay. However, the method proposed in this specification may be extended to a case where an Indirect Network Communication service is provided through a Layer-3 UE-to-Network Relay.

The path in this specification assumes that it is a path through NG-RAN (which may be only gNB, or may be both gNB and ng-eNB). However, the proposed method may also be extended to a path through non-3GPP access.

In the case of an indirect path, the contents of this specification may be applied not only to one-hop cases (e.g., when a UE (or Remote UE) receives a service from a network through one UE-to-Network Relay) but also to multi-hop cases (e.g., when a UE (or Remote UE) receives a service from a network through multiple UE-to-Network Relays).

In this specification, a path may mean a communication path, a routing path, a connection path, etc.

In this specification, UE (User Equipment) and terminal are used interchangeably. In addition, UE-to-Network Relay, ProSe UE-to-Network Relay, Relay, Relay UE, UE-NW Relay, 5G ProSe UE-to-Network Relay, 5G ProSe UE-to-NW Relay, 5G ProSe UE-to-Network Relay UE, etc. are used interchangeably. In addition, Remote UE, 5G Remote UE, etc. are used interchangeably.

In this specification, each path is assumed to have a different section between the UE and the NG-RAN, and the subsequent section, e.g., the section between the NG-RAN and the 5G CN, is assumed to have no difference between the paths. However, the contents of this specification may be applied even if the paths between the NG-RAN and the 5G CN for each path (which are control plane related paths and/or data plane related paths) are different.

The method proposed in this specification may be interpreted as being performed or supported when the Remote UE uses the Relay UE for multi-path purposes/purposes. One or more of the following assumptions/prerequisites may be required for the method proposed in this specification:
- The Remote UE and the Relay UE may explicitly or implicitly recognize each other that the Relay UE supports the indirect path for the Remote UE for multi-path purposes/purposes through the Relay Discovery operation and/or the PC5 unicast link formation/modification operation and/or the message exchange with the network.
- The base station may explicitly or implicitly recognize that the Remote UE uses the indirect path for multi-path purposes/purposes.

For Layer-2 UE-to-Network Relay-related operations and procedures, refer to TS 23.304 V17.3.0, TS 38.300 V17.0.0, TS 38.331 V17.0.0.

In this specification, the expressions 'a cell belongs to a base station' and 'a base station manages a cell' may be interpreted as having the same meaning. A base station may manage multiple cells.

The cases where cell reselection for a relay UE is performed and the cases where handover is performed are described below.

### I. Procedures according to cell reselection

The following drawings are created to explain specific examples of this specification. The names of specific devices or names of specific signals/messages/fields described in the drawings are provided for illustrative purposes only, and therefore the technical features of this specification are not limited to the specific names used in the following drawings.

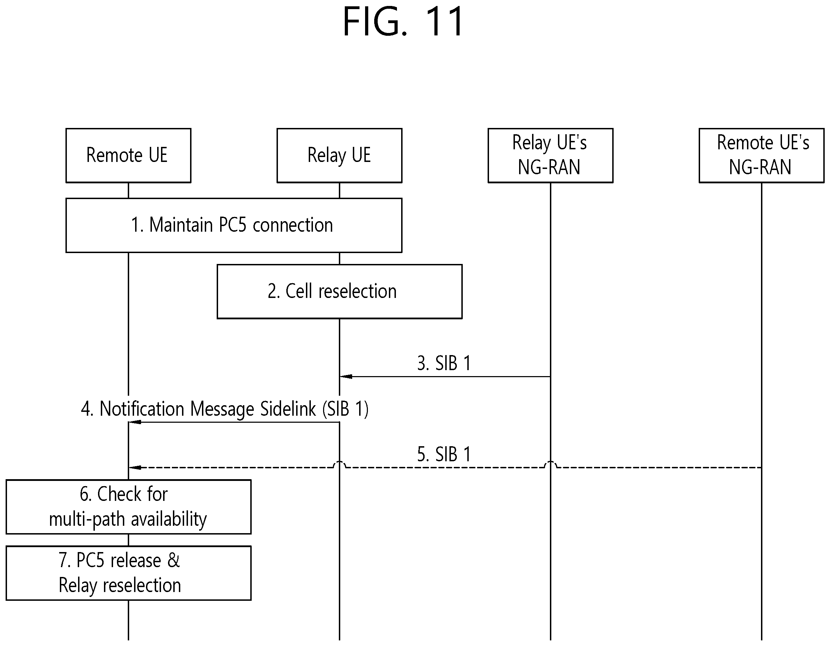

**FIG. 11** **shows a flowchart according to an embodiment of this specification.**

When cell reselection for a relay UE is performed, the remote UE may check whether the direct path and the indirect path through the relay UE can be serviced by the same base station. Based on the result of the check, the remote UE may determine whether multi-path transmission is possible.

Step 1: The PC5 connection between the remote UE and the relay UE may be continuously maintained.

The remote UE may be in an RRC_IDLE, RRC_INACTIVE, or RRC_CONNECTED state. The relay UE may be in an RRC_IDLE or RRC_INACTIVE state.

If the Remote UE may only use the Direct Path due to NAS message exchange (e.g., Registration Update, SMS transmission/reception, etc.) or signaling with the network, the Remote UE may be in the RRC_CONNECTED state. At this time, the Remote UE may continue to maintain the PC5 unicast link with the Relay UE, but may not use the Indirect Path through the Relay UE.

Step 2: The Relay UE may reselect a serving cell (e.g., serving cell).

Regarding cell reselection of the UE, the UE's operation may refer to TS 23.304 V17.3.0, TS 38.331 V17.0.0.

The base station to which the newly reselected serving cell of the Relay UE belongs may be the same as or different from the base station to which the serving cell for the Direct Path of the Remote UE belongs.

For example, the serving cell of the Remote UE may be the first cell. The relay UE that was served by the second cell may select the third cell through cell reselection. Due to cell reselection, the serving cell of the Relay UE may change from the second cell to the third cell. At this time, the base station managing the first cell (the base station to which the first cell belongs) and the base station managing the third cell (the base station to which the third cell belongs) may be the same or different.

Step 3: The Relay UE may receive SIB1 for the cell reselected in Step 2.

For example, the relay UE may receive SIB1 from the base station to which the third cell belongs. The SIB1 may include an ID for the third cell. The ID for the third cell may include an ID of the base station to which the third cell belongs.

Step 4: The Relay UE may notify the Remote UE that the serving cell has been reselected through a Notification Message Sidelink.

At this time, the SIB1 information received in Step 3 may be included and transmitted to the Remote UE. The Notification Message Sidelink may include the SIB1 information received in Step 3.

Alternatively, the Relay UE may immediately transmit the Uu Message Transfer Sidelink including SIB1 to the Remote UE after notifying the Remote UE that the serving cell has been reselected through the Notification Message Sidelink.

Alternatively, the Relay UE may include the Cell Identity of the cell reselected by the Relay UE in the Notification Message Sidelink. Additionally, the Relay UE may include gNB-ID-Length (which indicates the length of the gNB ID in the Cell Identity, which is 36 bits long) in the Notification Message Sidelink.

Alternatively, the Relay UE may include the gNB ID of the base station to which the cell reselected by the Relay UE belongs in the Notification Message Sidelink.

If the base station or PLMN supports multi-path operation, the base station or PLMN may also include gNB-ID-Length and/or gNB-ID in SIB1 (e.g., in PLMN-IdentityInfoList).

PLMNs capable of performing UE-to-Network Relay operation may each configure/provision the gNB-ID-Length in use to UEs (Remote UEs and/or Relay UEs). Then, the UEs (Remote UEs and/or Relay UEs) may extract the base station ID from the Cell Identity. Here, the PLMNs may correspond to "PLMNs in which the UE is authorized to relay traffic for 5G ProSe Layer-3 and/or Layer-2 Remote UEs" for Relay UEs, and "For 5G ProSe Layer-2 Remote UE, indicates the PLMNs in which the UE is authorized to use a 5G ProSe Layer-2 UE-to-Network Relay" for Remote UEs (see clause 5.1.4.1 of TS 23.304 V17.3.0). This may be applied throughout this specification.

For example, the relay UE may transmit a Notification Message Sidelink to the remote UE. The Notification Message Sidelink may include SIB1 received from the third cell in step 3. Or, the Notification Message Sidelink may include the cell ID of the third cell. The above Notification Message Sidelink may include the gNB ID of the base station to which the third cell belongs.

The Notification Message Sidelink and the Uu Message Transfer Sidelink are described below. The conventional Notification Message Sidelink may be extended for the embodiments of the present disclosure.

The Notification Message Sidelink can be used to send notification messages to U2N remote UEs to which a U2N (UE-to-Network) relay UE is connected.

The Notification Message Sidelink may include NotificationMessageSidelink-r17. The NotificationMessageSidelink-r17 may include criticalExtensions(CHOICE {notificationMessageSidelink-r17, NotificationMessageSidelink-r17-IEs, criticalExtensionsFuture}). NotificationMessageSidelink-r17-IEs may contain indicationType-r17(relayUE-Uu-RLF, relayUE-HO, relayUE-CellReselection, relayUE-Uu-RRC-Failure), lateNonCriticalExtension, nonCriticalExtension.

The Uu Message Transfer Sidelink may be used for sidelink transmission of Paging messages and System Information messages.

The Uu Message Transfer Sidelink may be transmitted from a L2 U2N Relay UE to a L2 U2N Remote UE.

The Uu Message Transfer Sidelink may contain UuMessageTransferSidelink-r17. UuMessageTransferSidelink-r17 may include criticalExtensions(CHOICE{uuMessageTransferSidelink-r17, UuMessageTransferSidelink-r17-IEs, criticalExtensionsFuture}). UuMessageTransferSidelink-r17-IEs is sl-PagingDelivery-r17(OCTET STRING (CONTAINING PagingRecord)), sl-SIB1-Delivery-r17(OCTET STRING (CONTAINING SIB1)), sl-SystemInformationDelivery-r17(OCTET STRING (CONTAINING SystemInformation)), Can include lateNonCriticalExtension(OCTET STRING) and nonCriticalExtension.

Uu Message Transfer Sidelink may include sl-PagingDelivery, sl-SIB1-Delivery, sl-SystemInformationDelivery. In RRC_IDLE or RRC_INACTIVE state, sl-PagingDelivery may be used to transfer paging records related to L2 U2N Remote UE. In RRC_IDLE or RRC_INACTIVE state, sl-SIB1-Delivery may be used to transfer SIB1 to L2 U2N Remote UE. In RRC_IDLE or RRC_INACTIVE state, sl-SystemInformationDelivery may be used to transfer SIB to L2 U2N Remote UE.

Step 5: Remote UE may receive SIB1 of serving cell for direct path.

Step 5 may be executed before Step 1 or between Steps 1 and 4.

For example, remote UE may receive SIB1 from the first cell.

Step 6: Based on the information received in Step 4 and Step 5, the Remote UE may determine whether Multi-path (Direct Path and Indirect Path via relay UE) transmission is possible.

The Remote UE may compare i) the ID of the base station to which the serving cell of the direct path of the Remote UE belongs and ii) the ID of the base station to which the serving cell of the Relay UE belongs, and if the two IDs are the same, it may decide to continue to maintain the PC5 connection with the Relay UE. For example, it can may decide to continue to use/maintain the indirect path via the Relay UE.

For example, the Remote UE may determine whether the base station to which the first cell belongs and the base station to which the third cell belongs are the same base station based on the SIB1 received from the first cell and the SIB1 of the third cell received from the relay UE. If they are the same base station, the Remote UE may decide to continue to maintain the PC5 connection with the relay UE. The Remote UE may decide to continue to use/maintain the indirect path via the Relay UE.

However, if the Remote UE determines that the Remote UE and the Relay UE belong to different base stations, Step 7 may be performed.

Step 7: The Remote UE may release the PC5 connection and/or perform Relay reselection.

The Remote UE may perform one or more of the following actions:

Step 7-1: The Remote UE may release the PC5 connection with the existing Relay UE.

To this, the AS (Access Stratum) layer of the Remote UE may release the PC5-RRC connection with the Relay UE and then inform the upper layer (e.g., ProSe layer) of this (that the PC5-RRC connection with the Relay UE has been released). Then, the upper layer of the Remote UE may send and receive a PC5-S message to the Relay UE to release the PC5 connection.

Or. The AS (Access Stratum) layer of the Remote UE may provide the upper layer with information such as the PC5 connection release, multi-path unavailability, or Indirect Path unavailability. Then, the upper layer of the Remote UE may send and receive a PC5-S message to the Relay UE to release the PC5 connection. After that, the PC5-RRC connection may also be released.

Or, the PC5 connection may be released locally in the Remote UE.

Step 7-2: The Remote UE may discover/select a new relay UE to establish a PC5 unicast link. The base station to which the serving cell of the new relay UE belongs may be the same as the base station to which the serving cell of the remote UE belongs.

The remote UE may search/select a new relay UE (e.g., a relay UE in a cell of the same base station) whose serving cell is a cell belonging to the base station serving the remote UE through the Direct Path to establish a PC5 unicast link (e.g., establish an indirect path).

The remote UE may select a new relay UE for the new Indirect Path.

The remote UE may communicate with the base station through a multi-path using the new Indirect Path by the new relay UE and the existing Direct Path.

This operation may be performed at a time when the remote UE deems it necessary to use multi-path (e.g., when data transmission/reception through multi-path is required, when a request for multi-path is received from an upper layer, etc.).

Step 7-1 may be performed before Step 7-2. Or, Step 7-2 may be performed before Step 7-1.

The above procedure may also be applied when the Relay UE is in RRC_CONNECTED state. For example, when the handover process for the Relay UE is in progress, the Relay UE may receive a new SIB1 from the target node while transmitting a response to the RRC reconfiguration received from the Source NG-RAN (i.e., RRC Reconfiguration Complete) to the target node. As in Step 4 above, the Relay UE may notify the Remote UE that the handover for the Relay UE has been completed through the Notification Message Sidelink. In addition, the Relay UE may also transmit the SIB1 information received from the target node to the Remote UE.

Instead of the Relay UE providing the serving cell/base station information of the Relay UE to the Remote UE through a PC5-RRC message, such as including SIB1 in the Notification Message Sidelink or delivering SIB1 immediately after the Notification Message Sidelink as in Step 4 above, an Additional parameters announcement procedure (see clause 6.5.1.3 of TS 23.304 V17.3.0) may be performed. For example, the Remote UE may request the Relay UE to notify a cell change for the Relay UE through an Additional Parameters Announcement Request. For example, after the Relay UE receives the Additional Parameters Announcement Request from the Remote UE, if the Relay UE performs a cell reselection process or a handover process, the Relay UE may transmit a message such as Relay Discovery Additional Information to the Remote UE while delivering new serving cell information (e.g., NCGI) of the Relay UE. In addition, the Relay Discovery Additional Information message may include gNB-ID-Length (which indicates the length of the gNB ID in the Cell Identity, which is 36-bit long) along with the NGCI. Or, the Relay Discovery Additional Information message may include the gNB ID of the base station to which the serving cell of the Relay UE belongs. For this purpose, the Additional parameters announcement procedure and/or the Relay Discovery Additional Information message in clause 6.5.1.3 of TS 23.304 V17.3.0 may be extended.

Although it is described for the case where the serving cell of the Relay UE changes, it may also be applied to the case where the serving cell changes as the Remote UE performs cell reselection. As a result, when the serving cell for one or more of the Remote UE and the Relay UE is changed, the Remote UE may check whether the cell to which it belongs and the cell to which the Relay UE belongs belong to the same base station. Accordingly, if they do not belong to the same base station, it may be determined that multi-path can no longer be used through the existing Relay UE. The above check (whether the cell to which the Remote UE belongs and the cell to which the Relay UE belongs belong to the same base station) may not be performed if the Remote UE is in RRC_IDLE state.

### II. Procedure according to handover

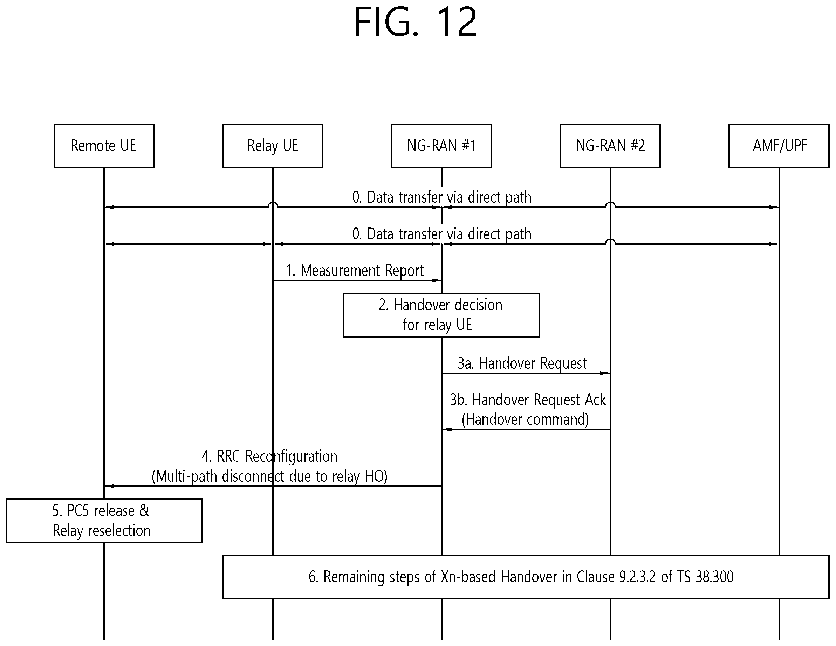

**FIG. 12** **shows a flowchart according to an embodiment of the present specification.**

If a handover is performed for a Relay UE while the Remote UE is performing multi-path transmission through the Direct path and the Indirect path through the Relay UE, the base station may determine whether multi-path transmission is continuously possible for the Remote UE.

Step 0: The remote UE may transmit and receive data with the NG-RAN#1 through the Indirect Path and the Direct Path.

The Relay UE and the Remote UE may be in the RRC_CONNECTED state, and both may be connected to the NG-RAN #1. Multi-path communication may be in progress between the Remote UE and the NG-RAN #1 through the Direct path (the path between the Remote UE and the NG-RAN #1) and the Indirect path (the path through the relay UE between the Remote UE and the NG-RAN #1). The PC5 connection between the Remote UE and the Relay UE may be continuously maintained.

Step 1: The Relay UE may perform a measurement based on the measurement configuration received from the NG-RAN #1 and report the measurement result to the NG-RAN #1.

The measurement may be a measurement for a cell. The Relay UE may perform a measurement for a cell belonging to the NG-RAN #1. The Relay UE may measure the signal strength for a cell belonging to the NG-RAN #1. The Relay UE may perform a measurement for a cell belonging to the NG-RAN #2. The Relay UE may measure the signal strength for a cell belonging to the NG-RAN #2.

The Relay UE may report the measurement result to the NG-RAN #1.

Step 2: Based on the measurement result, the NG-RAN #1 may decide to perform a handover for the Relay UE.

The NG-RAN #1 may select a target node for the handover. In FIG. 12, the target node may be a cell belonging to NG-RAN #2.

If the target node is a cell belonging to NG-RAN #1 (e.g., intra-NG-RAN handover), Step 3a and Step 3b may be omitted.

Step 3: NG-RAN #1 may initiate an Xn-based handover procedure to NG-RAN #2.

Alternatively, NG-RAN #1 may initiate an NG-based Handover procedure to NG-RAN #2.

Step 3a: NG-RAN #1 may send a Handover Request to NG-RAN #2.

Step 3b: NG-RAN #2 may send a Handover Request Ack to NG-RAN #1.

The Handover Request Ack may include a Handover command.

Step 4: NG-RAN #1 may send an RRC Reconfiguration message to the Remote UE via the direct path. The RRC Reconfiguration may include information (Multi-path disconnect due to relay HO) about the multi-path disconnection due to the handover for the relay UE.

NG-RAN #1 may know that it cannot transmit data to the remote UE via the Indirect Path through the Relay UE due to the handover. Therefore, NG-RAN #1 may determine to stop the multi-path transmission to the Remote UE. It may stop the DL data transmission towards the indirect path through the Relay UE.

NG-RAN #1 may send an RRC Reconfiguration message to the Remote UE via the direct path. The RRC Reconfiguration message may include information indicating that multi-path transmission is no longer possible as the Relay UE is handed over to NG-RAN #2.

Alternatively, instead of NG-RAN #1 directly notifying the remote UE of the multi-path transmission interruption via the Direct Path, NG-RAN #1 may notify the remote UE of the multi-path transmission interruption via the Indirect path via the Relay UE. To notify the remote UE of the multi-path transmission interruption via the Indirect path, one of the following procedures may be performed. In addition, multiple of the following procedures may be performed together:
1) The Relay UE, which has received the RRC Reconfiguration (including the Handover command) from NG-RAN #2, may forward the SIB1 received from NG-RAN #2 to the remote UE as in Step 4 of FIG. 11.
1-1) Alternatively, NG-RAN #1 may include 5G ProSe Authorized in the Handover Request message. Then, NG-RAN #2 may confirm that the UE being handed over via 5G ProSe Authorized is capable of relay operation. Then, NG-RAN #2 may include the gNB-ID in the Handover command message and transmit it to the NG-RAN #1. NG-RAN #1 may forward the Handover command to the relay UE. Then, when the Relay UE notifies the Remote UE that the Relay UE has been handed over through the Notification Message Sidelink, the Relay UE may transmit the gNB ID of the base station to which the cell to which it has been handed over belongs to the remote UE.
1-2) If the base station or PLMN supports multi-path operation, the base station or PLMN may include the gNB-ID-Length and/or gNB-ID in SIB1 (e.g., in PLMN-IdentityInfoList). The PLMNs capable of performing the UE-to-Network Relay operation may each set/provision the gNB-ID-Length they use to the UE (Remote UE and/or Relay UE). Then, the UE (Remote UE and/or Relay UE) may extract the base station ID from the Cell Identity. Here, the PLMNs may correspond to "PLMNs in which the UE is authorized to relay traffic for 5G ProSe Layer-3 and/or Layer-2 Remote UEs" in the case of the Relay UE, and "For 5G ProSe Layer-2 Remote UE, indicates the PLMNs in which the UE is authorized to use a 5G ProSe Layer-2 UE-to-Network Relay" in the case of the Remote UE (see clause 5.1.4.1 of TS 23.304 V17.3.0).
2) NG-RAN #1 may additionally transmit an indication requesting to stop multi-path transmission to the Remote UE while transmitting the handover command message received from NG-RAN #2 in Step 3 to the Relay UE. Then, the Relay UE may transmit the indication together with the Notification Message Sidelink to the Remote UE. Or, the Relay UE may release the PC5 connection with the Remote UE. Step 5-1 described below may be applied with regard to the PC5 connection release.
2-1) Or, instead of an indication requesting to stop multi-path transmission to the Remote UE, the NG-RAN #1 may transmit an indication to release the PC5 connection with the Remote UE. Then, based on the indication to release the PC5 connection with the Remote UE, the Relay UE may release the PC5 connection with the Remote UE. Step 5-1 described below may be applied with regard to the release of the PC5 connection.
3) The Handover Command received by the NG-RAN #1 from the NG-RAN #2 may include target cell ID information. The NG-RAN #1 may include the target cell ID information in the Notification Message Sidelink and transmit it to the Remote UE. NG-RAN #1 may additionally include gNB-ID-Length (which indicates the length of gNB ID in Cell Identity, which is 36-bit long) in the Notification Message Sidelink.
4) In Step 3a, while transmitting an XnAP Handover Request or NGAP Handover Required message to NG-RAN #2, NG-RAN #1 may transmit along with an ID for the Remote UE and an indication requesting to stop Multi-path transmission for the Remote UE. Upon receiving this, NG-RAN #2 may include the indication requesting to stop Multi-path transmission for the Remote UE and the ID for the Remote UE received from NG-RAN #1 in a Handover command message and transmit it to NG-RAN #1. Then, NG-RAN #1 may transmit a Handover command message including the ID for the Remote UE and the indication to the relay UE. Then, the Relay UE may transmit the above indication to the Remote UE via PC5. Or, the Relay UE may release the PC5 connection with the Remote UE. Regarding the release of the PC5 connection, Step 5-1 described below may be applied.

Step 5: The Remote UE may release the PC5 connection and/or perform Relay reselection.

The Remote UE, which received the RRC message in Step 4, may stop UL data transmission using the indirect path through the Relay UE. The Remote UE may perform one or more of the following actions.

Step 5-1: The Remote UE may release the PC5 connection with the existing Relay UE.

To this end, the AS (Access Stratum) layer of the Remote UE may release the PC5-RRC connection with the Relay UE and then notify the upper layer (e.g., ProSe layer) of this (that the PC5-RRC connection with the Relay UE has been released). Then, the upper layer of the Remote UE may release the PC5 connection by sending and receiving a PC5-S message to and from the Relay UE.

Or. The AS (Access Stratum) layer of the Remote UE may provide the upper layer with information such as PC5 connection release, multi-path unavailability, or Indirect Path unavailability. Then, the upper layer of the Remote UE may release the PC5 connection by sending and receiving a PC5-S message to and from the Relay UE. Afterwards, the PC5-RRC connection may also be released.

Or, the PC5 connection may be released locally in the Remote UE.

Step 5-2: The Remote UE may search/select a new relay UE to establish a PC5 unicast link. The base station to which the serving cell of the new relay UE belongs may be the same as the base station to which the serving cell of the remote UE belongs.

The Remote UE may establish a PC5 unicast link (e.g., establish an indirect path) by searching/selecting a new relay UE (e.g., a relay UE in a cell of the same base station) whose serving cell is a cell belonging to the base station serving the remote UE via the Direct Path.

The Remote UE may select a new relay UE for the new Indirect Path.

This operation may be performed at a time when it is regarded that the Remote UE is necessary to use multi-path (e.g., when data transmission/reception via multi-path is required, when a request for multi-path is received from an upper layer, etc.).

Step 5-1 may be performed before Step 5-2. Or, Step 5-2 may be performed before Step 5-1.

Step 6: The remaining steps of the Xn-based Handover procedure may be performed according to Clause 4.9.1.2 of TS 23.502 V17.4.0. Or, the remaining steps of the NG-based Handover procedure according to Clause 4.9.1.3 of TS 23.502 V17.4.0 may be performed.

A handover for the relay UE may be performed. The serving cell of the relay UE may be changed from a cell belonging to NG-RAN #1 to a cell belonging to NG-RAN #2 by the handover.

Step 4 and step 5 may be performed simultaneously with Step 6.

According to the disclosure of this specification, when mobility of the relay UE occurs due to cell reselection or handover of the relay UE, the remote UE may quickly determine a new base station to which the relay UE is connected and determine whether to maintain the PC5 connection with the relay UE. In addition, when the PC5 connection with the existing relay UE is released, a new relay UE capable of multi-path transmission may be selected immediately, thereby enabling fast multi-path transmission support for the remote UE.

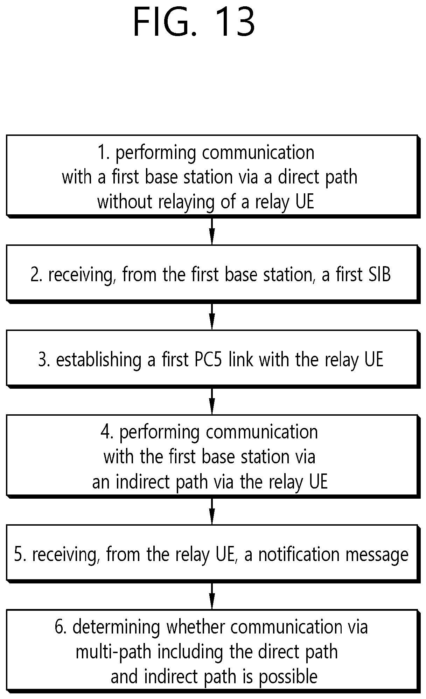

**FIG. 13** **shows the procedure of the remote UE for the disclosure of the present specification.**
1. The remote UE may performe communication with a first base station via a direct path without relaying of a relay UE.
2. The remote UE may receive, from the first base station, a first SIB (System Information Block).
3. The remote UE may establish a first PC5 (device-to-device communication) link with the relay UE.
4. The remote UE may perform communication with the first base station via an indirect path via the relay UE, based on the first PC5 link.
5. The remote UE may receive, from the relay UE, a notification message.

The notification message may include information that the relay UE has performed cell reselection.

The notification message may include a second SIB received by the relay UE from a second base station.

The second base station may manage a target cell of the cell selection.

6. The remote UE may determine whether communication via multi-path including the direct path and indirect path is possible, based on the first SIB and the second SIB.

The step of determining whether communication via the multi-path is possible is:
- The remote UE may determine communication via the multi-path is possible, based on the first base station and the second base station being the same, or
- The remote UE determine communication via the multi-path is impossible, based on the first base station and the second base station not being the same.

The first SIB may include ID (identity) of the first base station.

The second SIB may include ID of the second base station.

The remote UE may release the first PC5 link, based on the determining communication via the multi-path is impossible.

The remote UE establish a second PC5 link with a new relay UE, based on the determining communication via the multi-path is impossible.

The first SIB and the second SIB may be SIB1 (system information block type 1).

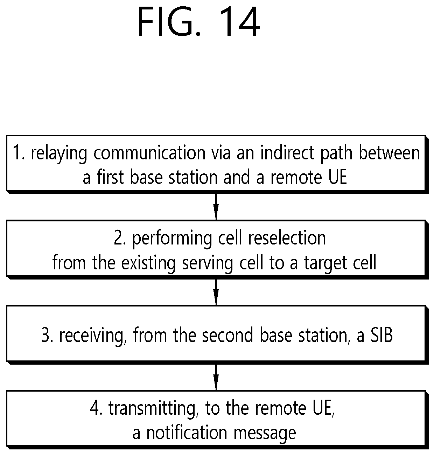

**FIG. 14** **shows the procedure of the relay UE for the disclosure of the present specification.**
1. The relay UE may relay communication via an indirect path between a first base station and a remote UE.

The first base station may manage an existing serving cell of the relay UE.

2. The relay UE may perform cell reselection from the existing serving cell to a target cell.

A second base station may manage the target cell.
3. The relay UE may receive, from the second base station, a SIB (System Information Block).
4. The relay UE may transmit, to the remote UE, a notification message.

The multi-path may include i) a direct path between the remote UE and the first base station without relaying of the relay UE and ii) the indirect path.

The notification message may include information that the relay UE has performed the cell reselection.

The notification message may include the SIB.

The notification message may include ID (identity) of the second base station.

The SIB may be SIB1 (system information block type 1).

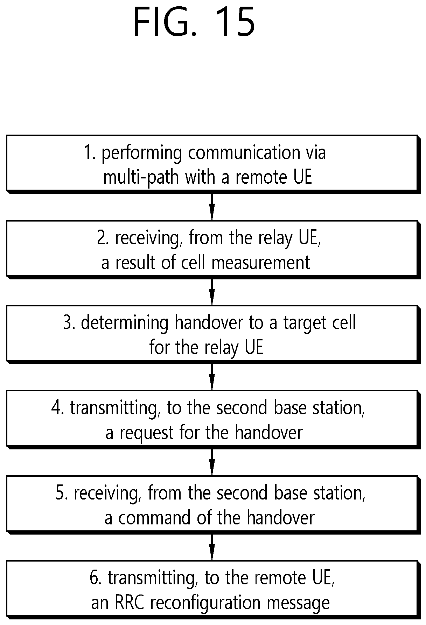

**FIG. 15** **shows the procedure of the first base station for the disclosure of the present specification.**
1. The first base station may perform communication via multi-path with a remote UE (User Equipment).

The multi-path may include i) a direct path between the remote UE and the first base station without relaying of a relay UE and ii) an indirect path between the remote UE and the first base station through relaying of a relay UE.
2. The first base station may receive, from the relay UE, a result of cell measurement.
3. The first base station may determine handover to a target cell for the relay UE, based on the result of cell measurement.

A second base station may manage the target cell.

4. The first base station may transmit, to the second base station, a request for the handover, based on the determination of the handover.
5. The first base station may receive, from the second base station, a command of the handover.
6. The first base station may transmit, to the remote UE, an RRC (Radio Resource Control) reconfiguration message.

The RRC reconfiguration message may include information that the multi-path is released due to the handover.

The first base station may stop communication via the indirect path.

The command may include ID (identity) of the second base station.

The command may include an indication requesting to stop transmission via the multi-path.

Hereinafter, an apparatus for performing communication according to some embodiments of the present specification will be described.

For example, a target V-SMF may include a processor, a transceiver, and a memory.

For example, a processor may be configured to be operably coupled with a memory and a processor.

The processor may perform: performing communication with a first base station via a direct path without relaying of a relay UE; receiving, from the first base station, a first SIB (System Information Block); establishing a first PC5 (device-to-device communication) link with the relay UE; performing communication with the first base station via an indirect path via the relay UE, based on the first PC5 link; receiving, from the relay UE, a notification message; wherein the notification message includes information that the relay UE has performed cell reselection, wherein the notification message includes a second SIB received by the relay UE from a second base station, wherein the second base station manages a target cell of the cell selection, determining whether communication via multi-path including the direct path and indirect path is possible, based on the first SIB and the second SIB.

Hereinafter, a processor for providing communication according to some embodiments of the present specification will be described.

The processor is configured to: performing communication with a first base station via a direct path without relaying of a relay UE; receiving, from the first base station, a first SIB (System Information Block); establishing a first PC5 (device-to-device communication) link with the relay UE; performing communication with the first base station via an indirect path via the relay UE, based on the first PC5 link; receiving, from the relay UE, a notification message; wherein the notification message includes information that the relay UE has performed cell reselection, wherein the notification message includes a second SIB received by the relay UE from a second base station, wherein the second base station manages a target cell of the cell selection, determining whether communication via multi-path including the direct path and indirect path is possible, based on the first SIB and the second SIB.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: performing communication with a first base station via a direct path without relaying of a relay UE; receiving, from the first base station, a first SIB (System Information Block); establishing a first PC5 (device-to-device communication) link with the relay UE; performing communication with the first base station via an indirect path via the relay UE, based on the first PC5 link; receiving, from the relay UE, a notification message; wherein the notification message includes information that the relay UE has performed cell reselection, wherein the notification message includes a second SIB received by the relay UE from a second base station, wherein the second base station manages a target cell of the cell selection, determining whether communication via multi-path including the direct path and indirect path is possible, based on the first SIB and the second SIB.

The present specification may have various effects.

For example, when cell reselection or handover is performed for a relay UE, multi-path communication can be performed effectively by allowing the remote UE to recognize the fact.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a remote UE (User Equipment), comprising:
performing communication with a first base station via a direct path without relaying of a relay UE;
receiving, from the first base station, a first SIB (System Information Block);
establishing a first PC5 (device-to-device communication) link with the relay UE;
performing communication with the first base station via an indirect path via the relay UE, based on the first PC5 link; receiving, from the relay UE, a notification message;
wherein the notification message includes information that the relay UE has performed cell reselection,
wherein the notification message includes a second SIB received by the relay UE from a second base station,
wherein the second base station manages a target cell of the cell selection,
determining whether communication via multi-path including the direct path and indirect path is possible, based on the first SIB and the second SIB.

2. The method of claim 1,
wherein the step of determining whether communication via the multi-path is possible is:
determining communication via the multi-path is possible, based on the first base station and the second base station being the same, or
determining communication via the multi-path is impossible, based on the first base station and the second base station not being the same.

3. The method of claim 1 or claim 2,
wherein the first SIB includes ID (identity) of the first base station,
wherein the second SIB includes ID of the second base station.

4. The method of one of the claims 1 to 3, further comprising:
releasing the first PC5 link, based on the determining communication via the multi-path is impossible.

5. The method of one of the claims 1 to 4, further comprising:
establishing a second PC5 link with a new relay UE, based on the determining communication via the multi-path is impossible.

6. The method of one of the claims 1 to 5,
wherein the first SIB and the second SIB are SIB1 (system information block type 1).

7. A method for performing communication, performed by a relay UE (User Equipment), comprising:
relaying communication via an indirect path between a first base station and a remote UE;
wherein the first base station manages an existing serving cell of the relay UE,
performing cell reselection from the existing serving cell to a target cell;
wherein a second base station manages the target cell,
receiving, from the second base station, a SIB (System Information Block);
transmitting, to the remote UE, a notification message,
wherein the multi-path includes i) a direct path between the remote UE and the first base station without relaying of the relay UE and ii) the indirect path,
wherein the notification message includes information that the relay UE has performed the cell reselection,
wherein the notification message includes the SIB.

8. The method of claim 7,
wherein the step of transmitting the notification message is: performed based on the remote UE performing communication via multi-path.

9. The method of claim 7 or claim 8,
wherein the notification message includes ID (identity) of the second base station.

10. The method of one of the claims 7 to 9,
wherein the SIB is SIB1 (system information block type 1).

11. A remote UE (User Equipment), to perform communication, comprising:
a transceiver; and
a processor,
wherein the processor performs operation that is a method of one of the claims 1 to 6.

12. A method for performing communication, performed by a first base station, comprising:
performing communication via multi-path with a remote UE (User Equipment);
wherein the multi-path includes i) a direct path between the remote UE and the first base station without relaying of a relay UE and ii) an indirect path between the remote UE and the first base station through relaying of a relay UE, receiving, from the relay UE, a result of cell measurement;
determining handover to a target cell for the relay UE, based on the result of cell measurement;
wherein a second base station manages the target cell,
transmitting, to the second base station, a request for the handover, based on the determination of the handover;
receiving, from the second base station, a command of the handover;
transmitting, to the remote UE, an RRC (Radio Resource Control) reconfiguration message,
wherein the RRC reconfiguration message includes information that the multi-path is released due to the handover.

13. The method of claim 12, further comprising:
stopping communication via the indirect path.

14. The method of claim 12 or claim 13,
wherein the command includes ID (identity) of the second base station.

15. The method of one of the claims 12 to 14,
wherein the command includes an indication requesting to stop transmission via the multi-path.

16. A first base station, to perform communication, comprising:
a transceiver, and
a processor,
wherein the processor performs operation that is a method of one of the claims 12 to 15.

17. An apparatus in mobile communication, comprising:
at least one processor; and
at least one memory storing instructions and operably electrically connectable with the at least one processor,
wherein, based on the instructions being operated by the at least one processor, the instructions perform operation that is a method of one of the claims 1 to 6.

18. A non-volatile computer readable storage medium having recorded instructions,
wherein the instructions, based on being executed by one or more processors, cause the one or more processors to perform operation that is a method of one of the claims 1 to 6.
